# FASCICULE DE BREVET EUROPEEN

(11) **EP 2 906 514 B1**
(45) Date de publication et mention de la délivrance du brevet: **18.12.2019**
(21) Numéro de dépôt: 13818382.7
(22) Date de dépôt: 15.10.2013
(51) Int. Cl.: C04B 35/105, C04B 35/106, C04B 35/12, C04B 35/626, C04B 35/66, C10J 3/74, F27D 1/00

(54) **PRODUIT REFRACTAIRE D'OXYDE DE CHROME**
FEUERFESTES PRODUKT AUS CHROMOXID.
REFRACTORY PRODUCT BASED ON CHROMIUM OXIDE

(30) Priorité: 15.10.2012 FR 1259832
(43) Date de publication de la demande: 19.08.2015
(73) Titulaire: Saint-Gobain Centre de Recherches et d'Etudes Européen, 92400 Courbevoie (FR)
(72) Inventeur: RAFFIN, Nicolas, F-84250 Le Thor (FR); SAN MIGUEL, Laurie, F-84210 Althen Des Paluds (FR)
(74) Mandataire: Nony
(86) Numéro de dépôt international: PCT/IB2013/059355
(87) Numéro de publication internationale: WO 2014/060940

(56) Documents cités:
- WO-A1-2006/097609
- WO-A1-2012/140624
- JP-A- 1 062 451
- MANIKPURAGE JAYARATNA ET AL: "Hot pressing of Y2O3-stabilized ZrO2 with Cr2O3 additions", JOURNAL OF MATERIALS SCIENCE, SPRINGER NETHERLANDS, NL, vol. 21, no. 2, 1 février 1986 (1986-02-01), pages 591-596, XP001265612, ISSN: 0022-2461

## Description

### Domaine technique

L'invention concerne un produit réfractaire comportant de l'oxyde de chrome, notamment utilisé en tant que revêtement interne de réacteur de gazéifieur, ou « gazéificateur ».

### Etat de la technique

On connaît en particulier un gazéifieur utilisé pour gazéifier du charbon. Le procédé de gazéification du charbon, connu depuis environ une cinquantaine d'années, connaît actuellement un fort développement. Il permet en effet, à partir de matières hydrocarbonées très diverses, par exemple le charbon, le coke de pétrole, la biomasse, le bois, le charbon de bois, voire les huiles lourdes à recycler, de produire des gaz de synthèse servant d'une part de source d'énergie propre, et d'autre part de composés de base pour l'industrie chimique. Ce procédé permet en outre d'éliminer les composants indésirables, par exemple les NOx, le soufre ou le mercure, avant tout rejet dans l'atmosphère.

Le principe de la gazéification consiste en une combustion partielle contrôlée, sous pression et en présence de vapeur d'eau ou d'oxygène, à une température comprise entre 1000 et 1600°C environ.

Il existe différents types de gazéifieurs, à lit fixe, fluidisé ou entraîné. Ces gazéifieurs diffèrent par le mode d'introduction des réactifs, la manière dont est effectué le mélange comburant-combustible, les conditions de température et de pression et le procédé d'évacuation des cendres ou du laitier résidu liquide issu de la réaction.

L'article intitulé « Refractories for Gasification » paru dans la revue « Refractories Applications and News » Volume 8, Number 4, July-August 2003, écrit par Wade Taber du département Energy Systems de la Division Saint-Gobain Industrial Ceramics, décrit la structure d'un revêtement réfractaire interne d'un gazéifieur. Ce gazéifieur est revêtu de différentes couches de produits réfractaires capables de résister aux conditions de température, de pression et d'environnement chimique auxquelles ils sont soumis pendant la gazéification. Les couches de produits réfractaires protègent ainsi la paroi métallique intérieure du gazéifieur de la chaleur et de la corrosion par les gaz et les laitiers.

La composition des laitiers dans les gazéifieurs est typiquement constituée de SiO₂, FeO ou Fe₂O₃, CaO et d'Al₂O₃. Elle peut également comporter d'autres oxydes issus des produits d'alimentation du gazéifieur. L'indice de basicité B = (CaO + MgO + Fe₂O₃) / (Al₂O₃+SiO₂) est typiquement d'environ 0,6 et le rapport C/S = CaO/SiO₂ est typiquement de 0,4, les teneurs étant en pourcentages en masse.

Pour accroître la durée de vie des revêtements réfractaires, soumis à la corrosion des laitiers et au cyclage thermique, les chercheurs ont tenté d'augmenter leur épaisseur. Cette solution présente cependant l'inconvénient de diminuer le volume utile du gazéifieur et donc son rendement.

James P. Bennett, dans l'article « Refractory liner used in slagging gasifiers » paru dans la revue « Refractories Applications and News », vol 9, numéro 5, septembre/octobre 2004, pages 20-25, explique que la durée de vie des revêtements réfractaires actuels des gazéifieurs, en particulier des systèmes refroidis par air, est très limitée malgré leur forte teneur en oxyde de chrome. Il mentionne notamment le rapport de SJ Clayton, GJ Stiegel et J.G Wimer « Gasification Technologies, Gasification Markets and Technologies - Present and Future, an Industry Perspective », US DOE report DOE /FE 0447 juillet 2002.

FR 2 883 282 décrit d'un revêtement réfractaire interne de gazéifieur présentant au moins une région en un matériau fritté comportant, en pourcentages en masse, au moins 40% d'oxyde de chrome (Cr₂O₃) et au moins 1% d'oxyde de zirconium (ZrO₂), au moins 20% en masse dudit oxyde de zirconium (ZrO₂) étant stabilisé sous la forme cubique et/ou quadratique, l'oxyde de zirconium étant en particulier stabilisé avec de l'oxyde de calcium. Ce revêtement présente ainsi une meilleure résistance à la corrosion.

WO 2008 109222 propose un traitement de protection des produits réfractaires constituant le revêtement réfractaire des gazéifieurs.

Il existe un besoin permanent pour un produit réfractaire présentant une résistance à la corrosion par les laitiers encore meilleure tout en résistant de manière satisfaisante aux chocs thermiques rencontrés à l'intérieur des gazéifieurs.

Le but de l'invention est de satisfaire ce besoin.

### Résumé de l'invention

Selon l'invention, on atteint ce but au moyen d'un produit réfractaire fritté présentant un granulat lié par une matrice et comportant, en pourcentages en masse sur la base des oxydes, plus de 40% d'oxyde de chrome (Cr₂O₃), moins de 50% d'oxyde d'aluminium (Al₂O₃), 1% ou plus d'oxyde de zirconium (ZrO₂) dont au moins 20% en masse est stabilisé sous la forme cubique et/ou quadratique, 0,1% ou plus et moins de 2,0% d'oxyde d'yttrium (Y₂O₃) agissant comme stabilisant de l'oxyde de zirconium (ZrO₂), moins de 1,9% d'oxyde d'hafnium (HfO₂), la teneur totale en oxydes de chrome, d'aluminium et de zirconium (Cr₂O₃ + Al₂O₃ + ZrO₂) étant supérieure à 70%, le produit comportant un co-dopant, agissant comme stabilisant de l'oxyde de zirconium ou pas, choisi parmi CaO, MgO, TiO₂ et leurs mélanges, la somme des teneurs en oxydes de calcium, de magnésium et de titane CaO + MgO + TiO₂ étant inférieure à 6,0% et supérieure à 0,5%, en pourcentages en masse, et plus de 50%, voire plus de 90%, de l'oxyde d'yttrium et du co-dopant étant contenu dans la matrice, en pourcentages en masse.

Comme on le verra plus en détail dans la suite de la description, de manière surprenante, la présence d'oxyde de zirconium spécifiquement stabilisé avec de l'oxyde d'yttrium permet d'améliorer la résistance à l'infiltration et à l'attaque par les laitiers, et également de conserver, voire améliorer la résistance aux chocs thermiques.

Un produit selon l'invention peut présenter encore une ou plusieurs des caractéristiques optionnelles suivantes :
- De préférence, la teneur en oxyde de chrome (Cr₂O₃) est supérieure à 50%, voire supérieure à 55%, voire supérieure à 60%, voire supérieure à 65%, voire supérieure à 70%, voire supérieure à 75%, voire supérieure à 80%, supérieure à 85%, et/ou inférieure à 95%, en pourcentages en masse.
- De préférence, la teneur en oxyde d'aluminium (Al₂O₃) est supérieure à 1%, voire supérieure à 1,5%, voire supérieure à 2% et/ou inférieure à 45%, voire inférieure à 40%, voire inférieure à 35%, voire inférieure à 30%, voire inférieure à 20%, voire inférieure à 10%, voire inférieure à 8%, voire inférieure à 5%, voire inférieure à 4%, en pourcentages en masse.
- De préférence, la teneur en oxyde d'aluminium (Al₂O₃) dans la matrice est supérieure à 1%, voire supérieure à 1,5%, et/ou inférieure à 10%, voire inférieure à 8%, voire inférieure à 5%, en pourcentage en masse sur la base de la masse des oxydes du produit.
- De préférence, la teneur en oxyde de zirconium (ZrO₂) est supérieure à 3%, voire supérieure à 4,5%, voire supérieure à 5%, voire supérieure à 6% et/ou inférieure à 10%, inférieure à 9%, ou inférieure à 8%, en pourcentages en masse.
- De préférence, plus de 30%, plus de 40%, plus de 50%, plus de 60% de l'oxyde de zirconium en pourcentage en masse, est stabilisé sous la forme cubique et/ou quadratique (ou « tétragonale »).
- Le seul oxyde de zirconium présent dans la matrice représente de préférence plus de 2,5%, voire plus de 4%, voire plus de 5% de la masse totale du produit.
- La teneur totale en oxydes de chrome, d'aluminium et de zirconium (Cr₂O₃ + Al₂O₃ + ZrO₂) est supérieure à 80%, supérieure à 85%, supérieure à 90%, en pourcentage en masse.
- La teneur totale des oxydes autres que Cr₂O₃, Al₂O₃, ZrO₂, Y₂O₃ et HfO₂ est inférieure à 25%, inférieure à 20%, inférieure à 15%, inférieure à 10%, ou inférieure à 5%.
- De préférence, la teneur en oxyde d'yttrium (Y₂O₃) est supérieure à 0,15%, voire supérieure à 0,20%, voire supérieure à 0,25%, voire supérieure à 0,30%, voire supérieure à 0,35%, voire supérieure à 0,40%, et/ou inférieure à 1,0%, en pourcentages en masse.
- De préférence, plus de 90%, plus de 95%, voire plus de 97%, ou sensiblement 100% de l'oxyde d'yttrium (Y₂O₃) est présent dans la matrice.
- Ledit co-dopant, agissant comme stabilisant de l'oxyde de zirconium ou pas, est de préférence CaO.
- La teneur en oxyde de calcium (CaO) est supérieure à 0,03%, voire supérieure à 0,04%, voire supérieure à 0,05%, voire supérieure à 0,1%, voire supérieure à 0,2%, voire supérieure à 0,5% et/ou inférieure à 5,0%, voire inférieure à 4,0%, voire inférieure à 3,0%, voire inférieure à 2,0%, voire inférieure à 1,0%, en pourcentages en masse.
- La teneur en oxyde de magnésium (MgO) est supérieure à 0,1%, voire supérieure à 0,2%, voire supérieure à 0,5% et/ou inférieure à 4,0%, voire inférieure à 3,0%, voire inférieure à 2,0%, voire inférieure à 1,0%, en pourcentages en masse.
- La teneur en oxyde de titane (TiO₂) est supérieure à 0,5% et/ou inférieure à 4,0%, voire inférieure à 3,0%, voire inférieure à 2,0%, voire inférieure à 1,0%, en pourcentages en masse.
- De préférence, la somme des teneurs en oxydes de calcium, de magnésium et de titane (CaO + MgO + TiO₂) est inférieure à 5,0%, voire inférieure à 4,0%, voire inférieure à 3,0%, et/ou supérieure à 1,0%, voire supérieure à 2,0%, en pourcentages en masse.
- De préférence encore, un co-dopant agit, au moins en partie, comme stabilisant de l'oxyde de zirconium.
- Dans un mode de réalisation, plus de 75%, voire plus de 90%, plus de 95%, voire sensiblement 100% de l'oxyde d'yttrium et du co-dopant, en particulier de l'oxyde de calcium, est contenu dans la matrice, en pourcentage en masse.
- De préférence, la teneur en oxyde de silicium (SiO₂) est supérieure à 0,5%, voire supérieure à 0,7%, voire supérieure à 1%, et/ou inférieure à 6%, voire inférieure à 5%, voire inférieure à 4%, voire inférieure à 3%, voire inférieure à 1,5%, en pourcentages en masse.
- De préférence, la teneur en oxyde d'hafnium (HfO₂) dans le produit, est inférieure à 1,8%, voire inférieure à 1,7%, voire inférieure à 1,5%, voire inférieure à 1,2%, voire inférieure à 1%, inférieure à 0,8%, inférieure à 0,5%, inférieure à 0,3%, voire inférieure à 0,2%, voire inférieure à 0,1%, en pourcentages en masse.
- De préférence, la somme des teneurs en oxydes de chrome (Cr₂O₃), d'aluminium (Al₂O₃), de zirconium (ZrO₂), d'yttrium (Y₂O₃), de calcium (CaO), d'aluminium (Al₂O₃), de silicium (SiO₂), de titane (TiO₂), de magnésium (MgO) et d'hafnium (HfO₂) est supérieure à 95%, de préférence supérieure à 98%, en pourcentages en masse, les autres constituants du produit étant de préférence des impuretés. Les impuretés comprennent classiquement le fer, en majeure partie sous forme Fe₂O₃ et les oxydes de métaux alcalins tels que Na₂O et K₂O. On considère que de telles teneurs en impuretés ne remettent pas en cause les avantages procurés par l'invention.
- De préférence, les oxydes représentent plus de 90%, plus de 95%, plus de 99%, voire sensiblement 100% de la masse du produit.
- La porosité ouverte du produit est supérieure à 5%, supérieure à 8%, supérieure à 10% et/ou inférieure à 25%, inférieure à 20%, voire inférieure à 15%.
- Le produit se présente sous la forme d'une couche appliquée contre la paroi intérieure d'un réacteur du gazéifieur ou sous la forme d'un assemblage de blocs agencé pour protéger ladite paroi. De préférence toute la couche ou tous les blocs de l'assemblage sont constitués en un produit selon l'invention.

De manière surprenante, les inventeurs ont également constaté qu'un produit selon l'invention peut présenter une résistance à la corrosion remarquable.

En particulier, un produit selon l'invention présente une résistance à la pénétration du laitier améliorée. On sait que la résistance à la corrosion résulte à la fois de la résistance à la dissolution par le laitier et aussi de la résistance à la pénétration du laitier dans le produit réfractaire. Cette pénétration entraîne en effet des propriétés différentes sur la couche de pénétration et conduit à de l'écaillage (en anglais « spalling ») : des morceaux de produit réfractaire peuvent alors se détacher en cours d'utilisation. On sait que l'écaillage est la cause principale d'endommagement pour les produits à forte teneur en chrome, connus par ailleurs pour avoir une bonne résistance à la dissolution chimique.

De préférence, le granulat représente plus de 60%, plus de 70%, et/ou moins de 90%, ou moins de 80% de la masse du produit, le complément à 100% étant constitué par la matrice.

Selon un mode de réalisation, la structure du produit présente un granulat constitué, pour plus de 80%, plus de 85%, plus de 90%, plus de 95%, voire plus de 97% de sa masse, d'oxyde de chrome et/ou d'oxyde d'aluminium, ledit granulat étant lié par une matrice constituée, pour plus de 90%, voire plus de 94% de sa masse, d'oxyde de zirconium et/ou d'oxyde d'yttrium et/ou d'oxyde de chrome et/ou d'oxyde d'aluminium et/ou d'oxyde de silicium, et éventuellement d'un co-dopant choisi parmi CaO, MgO, TiO₂ et leurs mélanges, le co-dopant agissant comme stabilisant de l'oxyde de zirconium ou pas. En particulier, le co-dopant peut être CaO.

L'invention concerne également un gazéifieur comportant un réacteur pourvu d'une paroi intérieure revêtue, au moins partiellement, par un revêtement réfractaire comportant un produit réfractaire selon l'invention, voire constitué par un tel produit.

Ledit produit réfractaire peut se présenter sous la forme d'une couche ou sous la forme d'un bloc.

L'invention concerne également une préforme adaptée pour conduire, par frittage, à un produit réfractaire fritté selon l'invention, et un mélange particulaire adapté pour conduire, par mise en forme, à une préforme selon l'invention.

L'invention concerne enfin un procédé de fabrication comportant les étapes successives suivantes :
a) préparation d'une charge,
b) coulage de ladite charge dans un moule et mise en forme, par exemple par vibration et/ou pressage et/ou pilonnage de ladite charge à l'intérieur du moule, de manière à former une préforme,
c) démoulage de la préforme,
d) de préférence, séchage de la préforme, de préférence sous air ou atmosphère contrôlée en humidité, de préférence de manière que l'humidité résiduelle de la préforme soit comprise entre 0 et 0,5%,
e) cuisson de la préforme, de préférence sous atmosphère oxydante, à une température comprise entre 1300 à 1600°C de manière à former un produit réfractaire fritté.

Selon l'invention, la charge est adaptée pour conduire, en fin d'étape e), à un produit réfractaire fritté selon l'invention et comporte une fraction matricielle comportant une poudre d'oxyde de zirconium stabilisée, au moins en partie, voire totalement, avec de l'oxyde d'yttrium, de préférence avec plus de 1%, voire plus de 2%, voire plus de 3% d'oxyde d'yttrium, en pourcentage massique sur la base de la masse totale d'oxyde de zirconium et d'oxyde d'yttrium.

Selon un mode de réalisation, la fraction matricielle comporte une poudre d'oxyde de zirconium stabilisée avec de l'oxyde d'yttrium comportant en outre un co-dopant de CaO.

De préférence, la fraction matricielle comporte au moins une poudre d'oxyde de zirconium stabilisée présentant une taille médiane supérieure à 5 µm.

Dans un mode de réalisation permettant de fabriquer un produit réfractaire fritté selon l'invention présentant une excellente résistance aux chocs thermiques, la fraction matricielle comporte, en pourcentage en masse sur la base du produit,
- plus de 1%, de préférence plus de 2%, voire plus de 2,5% ou plus de 3% et/ou moins de 10%, de préférence moins de 7,5%, de préférence moins de 5% d'une première poudre constituée de particules comportant, en pourcentage massique, plus de 80%, de préférence plus de 90%, voire sensiblement 100% d'oxyde de zirconium stabilisé à l'oxyde d'yttrium,
   plus de 40%, de préférence plus de 50%, de préférence plus de 60% et/ou moins de 90%, voire moins de 80% de l'oxyde de zirconium étant de préférence stabilisé sous forme quadratique et/ou cubique, en pourcentage massique sur la base de l'oxyde de zirconium,
   le percentile D₉₀ de ladite première poudre étant inférieur à 100 µm, voire inférieur à 60 µm, voire inférieur à 50 µm et/ou supérieur à 10 µm, supérieur à 20 µm, voire supérieur à 30 µm,
   de préférence, la taille médiane D₅₀ de ladite première poudre étant supérieure à 2 µm, voire supérieure à 5 µm et/ou, inférieure à 30 µm, voire inférieure à 20 µm, voire inférieure à 15 µm, et
- plus de 1%, voire plus de 1,5%, et/ou moins de 10%, moins de 7%, moins de 5% d'une deuxième poudre constituée de particules comportant, en pourcentage massique, plus de 80%, de préférence plus de 90%, voire sensiblement 100% d'oxyde de zirconium stabilisé avec de l'oxyde de calcium et de l'oxyde d'yttrium,
   plus de 40%, de préférence plus de 50%, de préférence plus de 60% et/ou moins de 90%, voire moins de 80% de l'oxyde de zirconium étant de préférence stabilisé sous forme quadratique et/ou cubique, en pourcentage massique sur la base de l'oxyde de zirconium,
   le percentile D₉₀ de ladite deuxième poudre étant inférieur à 100 µm, voire inférieur à 60 µm, voire inférieur à 50 µm et/ou supérieur à 20 µm, voire supérieur à 30 µm, voire supérieur à 40 µm,
   de préférence, la taille médiane D₅₀ de ladite deuxième poudre étant supérieure à 2 µm, voire supérieure à 5 µm, voire supérieure à 10 µm et/ou inférieure à 30 µm, voire inférieure à 20 µm, voire inférieure à 15 µm.

Dans la première poudre, le pourcentage massique d'oxyde d'yttrium est de préférence supérieur à 3%, supérieur à 5% et/ou inférieur à 15%, inférieur à 10%, voire inférieur à 8%, en pourcentage en masse sur la base de la somme de l'oxyde d'yttrium et de l'oxyde de zirconium.

Dans la deuxième poudre, le pourcentage massique d'oxyde de calcium est de préférence supérieur à 1%, supérieur à 2% et/ou inférieur à 10%, inférieur à 5% et/ou le pourcentage d'oxyde d'yttrium est de préférence supérieur à 0,5% et/ou inférieur à 5%, inférieur à 3%, en pourcentages en masse sur la base de la somme de l'oxyde de zirconium, de l'oxyde de calcium et de l'oxyde d'yttrium.

Les sources d'oxyde de zirconium peuvent contenir de l'oxyde d'hafnium, classiquement moins de 2% d'oxyde d'hafnium.

### Définitions

Par « préforme », on entend classiquement un ensemble de particules liées au moyen d'un liant, généralement temporaire, et dont la microstructure va évoluer lors du frittage. Un préforme peut notamment présenter la forme d'un bloc ou d'une couche, par exemple projetée sur une paroi d'un réacteur.

Par « particule », on entend un objet solide au sein d'une poudre, ou « mélange particulaire ». On distingue en particulier les particules présentant une taille supérieure à 150 µm, appelées « grains », et celles présentant une taille inférieure ou égale à 150 µm, appelées «particules fines » ou «particules matricielles ». L'ensemble des grains constitue le « granulat ». L'ensemble des particules matricielles constitue la « fraction matricielle ».

Par extension, on appelle également « granulat » et « fraction matricielle » les grains et les particules matricielles après qu'ils ont été solidarisés sous la forme d'une préforme. Le « granulat » désigne également les grains liés par la matrice après frittage.

Par « mélange particulaire », on entend un mélange sec de particules (non liées entre elles).

On appelle « taille » d'une particule la moyenne de sa plus grande dimension dM et de sa plus petite dimension dm : (dM+dm)/2. La taille des particules d'un mélange particulaire est évaluée classiquement par une caractérisation de distribution granulométrique réalisée avec un granulomètre laser. Le granulomètre laser peut être, par exemple, un Partica LA-950 de la société HORIBA.

Les percentiles ou « centiles » 10 (D₁₀), 50 (D₅₀), 90 (D₉₀) et 99,5 (D_{99,5}) d'une poudre sont les tailles de particules correspondant aux pourcentages, en masse, de 10%, 50%, 90% et 99,5% respectivement, sur la courbe de distribution granulométrique cumulée des particules de la poudre, les tailles de particules étant classées par ordre croissant. Par exemple, 10%, en masse, des particules de la poudre ont une taille inférieure à D₁₀ et 90% en masse des particules ont une taille supérieure ou égale à D₁₀. Les percentiles peuvent être évalués à l'aide d'une distribution granulométrique réalisée à l'aide d'un granulomètre laser.

On appelle « taille maximale » le percentile 99,5 (D_{99,5}) de ladite poudre.

On appelle « taille médiane » d'une poudre, le percentile D₅₀, c'est-à-dire la taille divisant les particules en première et deuxième populations égales en masse, ces première et deuxième populations ne comportant que des particules présentant une taille supérieure ou égale, ou inférieure respectivement, à la taille médiane.

Par « bloc », on entend un objet solide obtenu par un moulage d'une charge comportant un mélange particulaire (à la différence d'une couche de revêtement).

Par « matrice », on entend une phase cristallisée ou non, assurant une structure continue entre les grains et obtenue lors du frittage à partir de la fraction matricielle.

On appelle « frittage » un traitement thermique par lequel des particules réfractaires d'une préforme se transforment pour former une matrice liant entre elles d'autres particules de ladite préforme.

Par « produit réfractaire », on entend un produit présentant un point de fusion ou de dissociation supérieur à 1000°C.

Par « impuretés», on entend les constituants inévitables, introduits involontairement et nécessairement avec les matières premières ou résultant de réactions avec ces constituants. Les impuretés ne sont pas des constituants nécessaires, mais seulement tolérés. De préférence, la quantité massique des impuretés est inférieure à 2%, inférieure à 1%, inférieure à 0,5%, voire sensiblement nulle.

Par « précurseur » d'un composé ou d'un élément, on entend un constituant apte à fournir ledit composé, respectivement ledit élément, lors de la mise en oeuvre d'un procédé de fabrication selon l'invention.

Les teneurs en oxydes se rapportent aux teneurs globales pour chacun des éléments chimiques correspondants, exprimées sous la forme de l'oxyde le plus stable, selon la convention habituelle de l'industrie.

Sauf indication contraire, toutes les teneurs en oxydes des produits selon l'invention sont des pourcentages en masse exprimés sur la base des oxydes.

Par « contenant un », « comprenant un » ou « comportant un », on entend « comportant au moins un », sauf indication contraire.

### Description détaillée

Le produit réfractaire fritté selon l'invention est constitué de grains liés et entourés par une matrice.

Les grains peuvent présenter des analyses chimiques diverses, en particulier comporter de l'oxyde de chrome.

En particulier, le granulat peut être constitué, pour plus de 80%, voire plus de 85%, voire plus de 90%, voire plus de 95%, voire plus de 97% de sa masse, d'oxyde de chrome et/ou d'aluminium, en particulier d'oxyde de chrome.

La matrice comporte de préférence de l'oxyde de zirconium. Le seul oxyde de zirconium présent dans la matrice représente de préférence plus de 2,5%, voire plus de 5%, voire plus de 10% de la masse totale du produit. L'oxyde de zirconium est stabilisé par de l'oxyde d'yttrium et au moins 20% en masse est stabilisé sous la forme cubique et/ou quadratique.

En particulier, la matrice peut être constituée, pour plus de 90%, voire plus de 94% de sa masse, d'oxyde de zirconium et d'oxyde d'yttrium et/ou d'oxyde de chrome et/ou d'oxyde d'aluminium et/ou d'oxyde de silicium, et éventuellement d'un co-dopant choisi parmi CaO, MgO, TiO₂, et leurs mélanges, le co-dopant agissant comme stabilisant de l'oxyde de zirconium ou pas. De préférence, le co-dopant est CaO.

Dans un mode de réalisation, le produit comporte en pourcentage en masse sur la base des oxydes, pour un total de 100%,
- 60% < Cr₂O₃ < 95%, de préférence 65% < Cr₂O₃ < 90%,
- 1% < Al₂O₃ < 25%, de préférence 2% < Al₂O₃ < 10%, de préférence Al₂O₃ < 5%,
- 3% < ZrO₂ < 10%, de préférence 4% < ZrO₂ < 8%,
- HfO₂ < 1,0%, de préférence HfO₂ < 0,5%,
- 0,1%<Y₂O₃, de préférence 0,2% < Y₂O₃,
- autres oxydes < 10%, de préférence autres oxydes < 5%.

Pour fabriquer un bloc en un produit réfractaire fritté selon l'invention, on peut mettre en oeuvre un procédé comportant les étapes a) à e) ci-dessus.

Les étapes a) à e) sont des étapes classiquement mises en oeuvre pour fabriquer des produits frittés.

**A l'étape a),** on prépare une charge comportant :
- un mélange particulaire constitué par des particules des oxydes destinés à constituer le produit réfractaire fritté et/ou par des particules de précurseurs de ces oxydes,
- optionnellement, un ou plusieurs additifs,
- optionnellement, de l'eau.

La composition du mélange particulaire de la charge est déterminée en fonction de la composition finale du bloc.

De préférence, le mélange particulaire est constitué, pour plus de 90%, plus de 95%, voire sensiblement 100% en masse, de particules ayant une taille inférieure à 20 mm.

De préférence, les grains représentent plus de 60%, voire plus de 70%, et/ou moins de 90%, moins de 80% de la masse du mélange particulaire, le complément à 100% étant constitué des particules matricielles.

La façon de déterminer les quantités des oxydes ou précurseurs d'oxydes dans la charge est parfaitement connue de l'homme du métier. En particulier, l'homme du métier sait que les oxydes de chrome, d'aluminium et de zirconium présents dans la charge de départ se retrouvent dans le produit réfractaire fabriqué. Certains oxydes peuvent également être apportés par les additifs. Pour une même quantité des constituants du produit réfractaire fritté, la composition de la charge de départ peut donc varier, notamment en fonction des quantités et de la nature des additifs présents dans cette charge.

L'oxyde de chrome peut être apporté sous forme d'un mélange de particules frittées ou fondues d'oxyde de chrome comportant éventuellement de l'oxyde d'aluminium.

De préférence, la source d'oxyde de zirconium comporte plus de 80%, de préférence plus de 90%, en masse d'oxyde de zirconium.

L'oxyde de zirconium est apporté sous forme d'une poudre d'oxyde de zirconium stabilisée, de préférence au moyen d'oxyde d'yttrium. Au moins 20% en masse de l'oxyde de zirconium est stabilisé sous la forme cubique et/ou quadratique. L'oxyde de zirconium peut comporter un co-dopant. De préférence, le co-dopant est choisi parmi CaO, MgO, TiO₂ et leurs mélanges. De préférence, le co-dopant est CaO.

De préférence, l'oxyde de zirconium est dopé à plus de 3%, voire plus de 4%, voire plus de 5% par de l'oxyde d'yttrium et éventuellement un co-dopant, de préférence choisi parmi CaO, MgO, TiO₂ et leurs mélanges, en pourcentage massique sur la base de la masse totale de l'oxyde de zirconium, de l'oxyde d'yttrium et du co-dopant. De préférence, le co-dopant est CaO et sa teneur dans la poudre d'oxyde de zirconium est comprise entre 2% et 4% sur la base de la masse totale de l'oxyde de zirconium, de l'oxyde d'yttrium et de l'oxyde de calcium.

L'oxyde de zirconium stabilisé est de préférence introduit, pour plus de 70%, plus de 80%, plus de 90%, voire sensiblement 100% de sa masse, sous la forme de particules matricielles.

L'oxyde d'hafnium HfO₂ est toujours naturellement présent dans les sources d'oxyde de zirconium, à des teneurs généralement inférieures à 2%. Dans un mode de réalisation, l'oxyde d'hafnium n'est introduit qu'à titre d'impuretés, en particulier avec la source d'oxyde de zirconium.

L'oxyde d'aluminium peut être notamment apporté dans le granulat sous forme d'un mélange de particules frittées ou fondues d'oxyde de chrome et d'oxyde d'aluminium ou dans la fraction matricielle sous forme d'un mélange de particules d'alumine calcinée ou réactive, voire de corindon blanc.

Les additifs peuvent être ajoutés à la charge pour lui assurer une plasticité suffisante pendant l'étape b) de mise en forme et pour conférer une résistance mécanique suffisante à la préforme obtenue en fin des étapes c) et d). Comme exemples d'additifs utilisables, bien connus de l'homme du métier, on peut citer de façon non limitative :
- des liants temporaires (c'est-à-dire éliminés en tout ou en partie lors des étapes de séchage et de cuisson) organiques, tels que les résines, des dérivés de la cellulose ou de la lignone, des alcools polyvinyliques ; De préférence, la quantité de liant temporaire est comprise entre 0,1 et 6% en masse par rapport à la masse du mélange particulaire de la charge ;
- des agents de mise en forme tels que les stéarates de magnésium ou de calcium ;
- des liants hydrauliques tels qu'un ciment de type aluminate de CaO ;
- des défloculants tels que les polyphosphates alcalins ou les dérivés méthacrylates ;
- des promoteurs de frittage tels que le bioxyde de titane ou l'hydroxyde de magnésium ;
- des ajouts de type argileux qui vont faciliter la mise en oeuvre et aider au frittage. Ces ajouts apportent de l'alumine et de l'oxyde de silicium, et quelques oxydes de métaux alcalins ou alcalino terreux, voire de l'oxyde de fer, selon le type d'argile.

Les quantités d'additifs ne sont pas limitatives. En particulier, les quantités classiquement mises en oeuvre dans les procédés de frittage sont appropriées.

De préférence, la teneur en argile dans la charge de départ est supérieure à 0,5%, supérieure à 1,0%, supérieure à 1,5%, et/ou inférieure à 5,0%, inférieure à 3,0%, en pourcentage massique sur la base des oxydes.

Les sources d'oxyde de zirconium comportaient classiquement des traces d'oxyde d'hafnium.

Le cas échéant, si un additif apporte un ou plusieurs des oxydes entrant dans la composition du produit réfractaire, on tient de préférence compte de cet apport pour déterminer la composition du mélange particulaire.

De préférence, la charge comporte, en pourcentage en masse :
- plus 60% et de préférence moins de 90% de grains ;
- moins de 40% de particules matricielles ;
- moins de 7% d'un ou plusieurs additifs de mise en forme.

De préférence, les grains et les particules matricielles représentent ensemble plus de 94%, de préférence plus de 95% de la masse de la charge.

Le mélange des différents constituants de la charge est poursuivi jusqu'à obtention d'une masse sensiblement homogène.

De préférence, on ajoute entre 1% et 5% d'eau, en pourcentage en masse sur la base du mélange particulaire.

La charge est de préférence conditionnée. Avantageusement, elle est ainsi prête à l'emploi.

L'invention porte également sur un mélange particulaire tel que décrit ci-dessus et sur une charge préparée ou susceptible d'avoir été préparée lors d'une étape a).

**A l'étape b),** la charge est disposée dans un moule, puis mise en forme.

Dans le cas d'une mise en forme par pressage, une pression spécifique de 400 à 800 Kg/cm² est appropriée. Le pressage est de préférence effectué de manière uniaxiale ou isostatique, par exemple au moyen d'une presse hydraulique. Il peut être avantageusement précédé d'une opération de damage manuel ou pneumatique et/ou de vibration.

**A l'étape c),** la préforme ainsi obtenue est démoulée.

**A l'étape d),** le séchage peut être effectué à une température modérément élevée. De préférence, il est effectué à une température comprise entre 110°C et 200°C. Il dure classiquement entre 10 heures et une semaine selon le format de la préforme, jusqu'à ce que l'humidité résiduelle de la préforme soit inférieure à 0,5%.

L'invention porte également sur une préforme obtenue à l'étape c) ou à l'étape d).

**A l'étape e),** la préforme séchée est mise à cuire. La durée de la cuisson, comprise entre 3 et 15 jours environ de froid à froid, est variable en fonction de la composition mais aussi de la taille et de la forme de la préforme. Le cycle de cuisson est de préférence effectué de manière classique, sous air, à une température comprise entre 1300°C et 1600°C.

De préférence, le produit réfractaire fritté obtenu à l'issue de l'étape e) se présente sous la forme d'un bloc ayant une masse supérieure à 1 kg et/ou dont toutes les dimensions sont supérieures à 100 mm.

De manière surprenante, le produit réfractaire fritté obtenu à l'issue de l'étape e) s'est avéré particulièrement résistant aux contraintes rencontrées à l'intérieur des réacteurs de gazéifieur, notamment résistant à l'infiltration par les laitiers ou les cendres en fusion.

L'étape de cuisson e) peut être effectuée, totalement ou en partie, après assemblage de la préforme dans le réacteur.

Les blocs sont assemblés au moyen de joints de dilatation appropriés, suivant des techniques bien connues de l'homme de l'art.

La fabrication d'un produit selon l'invention n'est pas limitée au procédé décrit ci-dessus. En particulier, l'invention porte également sur un produit réfractaire selon l'invention sous la forme d'un revêtement d'un réacteur, notamment d'un gazéifieur. A cet effet, une charge, par exemple fabriquée suivant l'étape a) ci-dessus, peut être appliquée en couche sur la surface intérieure de la paroi du réacteur, par exemple par coulage, vibrocoulage ou projection, en fonction des besoins et avec une grande souplesse, puis frittée *in situ* pendant la préchauffe du réacteur, de manière à réaliser un revêtement en un produit réfractaire selon l'invention. Le frittage a de préférence lieu à pression atmosphérique, de préférence sous atmosphère oxydante et de préférence à une température comprise entre 1300 et 1600°C.

Afin de ne pas alourdir inutilement la présente description, toutes les combinaisons possibles selon l'invention entre les différents modes de réalisation ne sont pas reportées. Il est cependant bien entendu que toutes les combinaisons possibles des domaines et valeurs initiaux et/ou préférés précédemment décrits en ce qui concerne le produit, la matrice ou le granulat ou encore le procédé sont envisagées.

### Exemples

Les exemples qui vont suivre permettent d'illustrer, de façon non exhaustive, l'invention. Pour ces exemples, les matières premières suivantes ont été utilisées :
- poudre d'oxyde de chrome fritté comportant environ 98% de Cr₂O₃ et 2% de TiO₂ en masse, et constituée d'au moins 90% en masse de particules ayant une taille supérieure à 20 microns mais inférieure à 5 mm (poudre G1),
- poudre d'oxyde de chrome fritté comportant environ 88% de Cr₂O₃, environ 6% d'Al₂O₃, environ 3,5% de SiO₂ et environ 1,8% de TiO₂ en masse, et constituée d'au moins 90% en masse de particules ayant une taille supérieure à 20 microns mais inférieure à 5 mm (poudre G2),
- poudre d'oxyde de chrome fritté comportant environ 45% de Cr₂O₃, environ 52% d'Al₂O₃, environ 1,1% de SiO₂ et environ 1,6% de TiO₂ en masse, et constituée d'au moins 90% en masse de particules ayant une taille supérieure à 20 microns mais inférieure à 5 mm (poudre G3),
- poudre d'oxyde de chrome pigmentaire (>98% de Cr₂O₃) dont la taille médiane (D₅₀) est inférieure à 2 microns (poudre P1),
- poudre d'oxyde de zirconium (>98% en masse de ZrO₂) stabilisée avec 4,2% en masse de CaO, la taille des particules étant inférieure à 50 microns, la taille médiane étant d'environ 12 µm, et lesdites particules comportant environ 70% d'oxyde de zirconium sous forme quadratique et/ou cubique (poudre P2),
- poudre d'alumine (>98% en masse d'Al₂O₃) dont la taille médiane (D₅₀) est inférieure à 10 microns (poudre P3),
- poudre d'oxyde de zirconium (>91% en masse de ZrO₂) stabilisée avec environ 3,2% en masse de CaO et environ 1,1% en masse de Y₂O₃, comportant environ 70% d'oxyde de zirconium sous forme quadratique et/ou cubique, en pourcentage massique sur la base de la zircone, la taille des particules étant inférieure à 60 microns (D₉₀=47 µm) avec une taille médiane d'environ 13 µm (poudre P4),
- poudre d'oxyde de zirconium (>91% en masse de ZrO₂) stabilisée avec environ 6,4% en masse de Y₂O₃, comportant environ 70% d'oxyde de zirconium sous forme quadratique et/ou cubique, en pourcentage massique sur la base de la zircone, la taille des particules étant inférieure à 50 microns (D₉₀=34 µm) avec une taille médiane d'environ 8 µm (poudre P5a), ou étant inférieure à 15 microns (D₉₀=8 µm) avec une taille médiane d'environ 3 µm (poudre P5b),
- poudre d'oxyde d'yttrium (>99% de Y₂O₃) dont la taille médiane (D₅₀) est comprise entre 5 et 10 microns (poudre P6),
- additifs : argile RR40 comportant environ 40% d'Al₂O₃, environ 55% de SiO₂, environ 2,3% de TiO₂, environ 2% de Fe₂O₃ et environ 0,6% de CaO.

Les produits testés ont été fabriqués suivant les étapes a) à e) décrites ci-dessus.

A l'étape a), les matières premières telles qu'indiquées dans le tableau 1 ont été mélangées avec 0,5 à 2% d'argile RR40 et environ 3% d'eau ainsi que 0,3 à 0,7% de liants (stéarate de magnésie et Bretax C) ont été ajoutés au mélange particulaire, en pourcentage sur la base dudit mélange particulaire.

L'oxyde de silicium provient, pour l'essentiel, de l'ajout d'argile.

A l'étape b), on a effectué une compaction de la charge à l'intérieur du moule à une pression de 600 Kg/cm² de manière à former une préforme.

A l'étape d), la cuisson a été effectuée sous air à une température comprise entre 1400 à 1600°C de manière à former un produit réfractaire fritté.

Les mesures de masse volumique apparente (Mv) et de porosité ouverte (Po) ont été réalisées selon la norme ISO 5017 sur les produits avant toute corrosion.

L'évolution du module de rupture en flexion de produits ayant subi un choc thermique entre 800°C et 20°C a été évaluée selon la norme ISO 5014. La valeur de module de rupture en flexion résiduel après une épreuve de choc thermique est notée « MOR res » et la perte de MOR (« MOR res » par rapport au MOR initial mesuré à 20°C) est notée « Δ MOR » dans le tableau 1. Le « MOR res » doit être le plus élevé possible. Un « Δ MOR » plus faible (d'au moins 20% en valeur absolue) indique une plus grande stabilité des propriétés du produit. De même, la valeur de module de rupture en flexion résiduel après trois épreuves de choc thermique est notée « MOR res 3 » et la perte de MOR (« MOR res 3 » par rapport au MOR initial mesuré à 20°C) est notée « Δ MOR 3 » dans le tableau 1.

Les autres mesures ont été effectuées sur des produits soumis, après frittage, à une corrosion représentative des conditions de service subies par la face chaude des revêtements de gazéifieur. Cette corrosion a été obtenue de la manière suivante. Huit éprouvettes du produit à tester, de longueur 200 mm et de section trapézoïdale dont les bases mesurent respectivement 63 mm et 90 mm et la hauteur 33 mm, sont placées dans une virole métallique pour constituer un four rotatif dans lequel est placé le laitier en fusion, à une température de 1600°C pendant 5 heures. Les éprouvettes et la virole sont mises en rotation à une vitesse de 2 tours par minute.

Le laitier utilisé présentant la composition massique suivante :
- SiO₂ : environ 30- 50%
- Al₂O₃ : environ 10 - 20%
- Fe₂O₃ ou FeO : 15 - 25%
- CaO : environ 10 -20%
- Autres espèces telles que MgO : complément à 100%.

L'indice de basicité B de ce laitier, c'est-à-dire le rapport massique (CaO + MgO+Fe₂O₃)/(SiO₂+Al₂O₃) était typiquement de l'ordre de 0,6. Le rapport massique CaO/SiO₂ était de l'ordre de 0,4.

La profondeur de pénétration de CaO provenant du laitier est mesurée grâce à une microsonde réalisée sur coupe métallographique. L'indicateur de pénétration (Ip) est égal au rapport de la profondeur pénétrée de l'éprouvette de l'exemple de référence (exemple 1 pour les exemples 2 à 8, exemple 9 pour les exemples 10, 13 et 14, exemple 11 pour l'exemple 12 et exemple 15 pour l'exemple 16) sur la profondeur pénétrée de l'éprouvette de l'exemple considéré, multiplié par 100. Ip est donc de 100 pour le produit de référence et une valeur supérieure à 110 indique une meilleure résistance à la pénétration du laitier. Les valeurs supérieures à 165 sont représentatives d'une résistance à la pénétration du laitier très significativement améliorée (+50%).

Le tableau 1 ci-dessous résume les résultats obtenus.

La teneur en HfO₂ est sensiblement égale à 0,1%.

**Tableau 1**

| N° | 1 | 2 | 3 | 4 | 5 | 6 | 7 | 8 |
|---|---|---|---|---|---|---|---|---|
| Eléments de la charge | | | | | | | | |
| G1 | 74,5 | 74,5 | 74,5 | 74,5 | 74,5 | 74,5 | 74,5 | 74,5 |
| P1 | 14,7 | 14,7 | 14,7 | 14,7 | 14,7 | 14,7 | 14,7 | 14,7 |
| P2 | 6,9 | 5,9 | 3,4 | | | | | |
| P3 | 1,9 | 1,9 | 1,9 | 1,9 | 1,9 | 1,9 | 1,9 | 1,9 |
| P4 | | | | 6,9 | | | 3,4 | 3,4 |
| P5a | | | 3,4 | | 6,9 | | | 3,4 |
| P5b | | | | | | 6,9 | 3,4 | |
| P6 | | 1,0 | | | | | | |

| Analyse chimique calculée sur la base des matières premières (en% en masse) | | | | | | | | |
|---|---|---|---|---|---|---|---|---|
| Cr₂O₃ | 87,6 | 87,6 | 87,7 | 87,7 | 87,6 | 87,7 | 87,7 | 87,7 |
| ZrO₂+HfO₂ | 6,5 | 5,6 | 6,4 | 6,4 | 6,4 | 6,4 | 6,4 | 6,4 |
| SiO₂ | 1,1 | 1,1 | 1,1 | 1,1 | 1,1 | 1,1 | 1,1 | 1,1 |
| Al₂O₃ | 2,8 | 2,8 | 2,8 | 2,8 | 2,8 | 2,8 | 2,8 | 2,8 |
| TiO₂ | 1,6 | 1,6 | 1,6 | 1,6 | 1,6 | 1,6 | 1,6 | 1,6 |
| CaO | 0,3 | 0,3 | 0,2 | 0,2 | / | / | 0,1 | 0,1 |
| Y₂O₃ | / | 1,0 | 0,2 | 0,1 | 0,5 | 0,4 | 0,3 | 0,3 |

| Autres propriétés du produit fritté (avant corrosion) | | | | | | | | |
|---|---|---|---|---|---|---|---|---|
| Mv (g/cm³) | 4,2 | 4,2 | 4,3 | 4,2 | 4,3 | 4,2 | 4,2 | 4,2 |
| Po (%) | 14,3 | 13,1 | 11,8 | 14,0 | 13,4 | 13,6 | 14,1 | 14,2 |

| Résistance aux chocs thermiques | | | | | | | | |
|---|---|---|---|---|---|---|---|---|
| MOR res (MPa) | 11 | 9 | 13 | 13 | 16 | 9 | 11 | 14 |
| Δ MOR (%) | -72 | -80 | -67 | -63 | -60 | -82 | -74 | -42 |
| MOR res 3 (MPa) | 3 | 3 | 8 | 5 | 3 | 2 | 4 | 13 |
| Δ MOR 3 (%) | -91 | -94 | -80 | -86 | -92 | -96 | -90 | -46 |

| Mesures de résistance à la pénétration de CaO due à la corrosion | | | | | | | | |
|---|---|---|---|---|---|---|---|---|
| Ip | 100 | 109 | 207 | 164 | 249 | 328 | 295 | 193 |

**Tableau 2**

| N° | 9 | 10 | 11 | 12 | 13 | 14 | 15 | 16 |
|---|---|---|---|---|---|---|---|---|
| Eléments de la charge | | | | | | | | |
| G1 | 75,2 | 75,2 | | | 75,2 | 75,2 | 81,2 | 81,2 |
| G2 | | | 42 | 42 | | | | |
| G3 | | | 34 | 34 | | | | |
| P1 | 17,0 | 17,0 | 15 | 15 | 17,0 | 17,0 | 11,9 | 11,9 |
| P2 | 4,5 | | 7,0 | | | | 4,0 | |
| P3 | 2,3 | 2,3 | 2,0 | 2,0 | 2,3 | 2,3 | 2,0 | |
| P4 | | | | | 2,3 | 1,5 | | 1,0 |
| P5a | | 4,5 | | 7,0 | 2,2 | 3,0 | | 3,0 |

| Analyse chimique calculée sur la base des matières premières (en% en masse) | | | | | | | | |
|---|---|---|---|---|---|---|---|---|
| Cr₂O₃ | 90,7 | 90,9 | 65,2 | 65,2 | 90,7 | 90 ,7 | 91,4 | 91,4 |
| ZrO₂ + HfO₂ | 4,3 | 4,3 | 6,9 | 6,5 | 4,2 | 4,2 | 3,7 | 3,7 |
| SiO₂ | 0,6 | 0,3 | 2,4 | 2,4 | 0,6 | 0,6 | 0,6 | 0,6 |
| Al₂O₃ | 2,7 | 2,7 | 23,7 | 23,7 | 2,7 | 2,7 | 2,4 | 2,4 |
| TiO₂ | 1,5 | 1,5 | 1,2 | 1,2 | 1,5 | 1,5 | 1,7 | 1,7 |
| CaO | 0,19 | / | 0,4 | / | 0,05 | 0,08 | 0,17 | 0,04 |
| Y₂O₃ | / | 0,29 | / | 0,5 | 0,21 | 0,17 | / | 0,20 |

| Autres propriétés du produit fritté (avant corrosion) | | | | | | | | |
|---|---|---|---|---|---|---|---|---|
| Mv (g/cm³) | 4,2 | 4,3 | 4,0 | 4,0 | 4,2 | 4,2 | 4,2 | 4,2 |
| Po (%) | 14,6 | 13,1 | 13,4 | 12,5 | 16,3 | 15,8 | 15,0 | 15,5 |

| Résistance aux chocs thermiques | | | | | | | | |
|---|---|---|---|---|---|---|---|---|
| MOR res (MPa) | 10 | 11 | 11 | 10 | 17 | 19 | 9 | 16 |
| Δ MOR (%) | -71 | -76 | -51 | -63 | -32 | -27 | -71 | -43 |
| MOR res 3 (MPa) | ND | ND | ND | ND | 12 | 19 | 7 | 11 |
| Δ MOR 3 (%) | | | | | -50 | -54 | -79 | -60 |

| Mesures de résistance à la pénétration de CaO due à la corrosion | | | | | | | | |
|---|---|---|---|---|---|---|---|---|
| Ip | 100 | 487 | 100 | 151 | 258 | 248 | 100 | 235 |

Les tableaux permettent de vérifier que l'ajout d'oxyde de zirconium dopée par de l'oxyde d'yttrium a un effet très favorable pour la résistance à la pénétration du laitier (Ip) dès que la teneur en oxyde d'yttrium dans le produit atteint 0,1% en masse, en particulier pour les produits à plus forte teneur en oxyde de chrome (notamment, supérieure à 70% en masse), ce qui conduit à une réduction du phénomène d'écaillage (« spalling ») permettant ainsi d'améliorer la durée de vie de ce type de produits.

Cet ajout permet également de conserver, voire d'améliorer la résistance aux chocs thermiques, d'autant plus que la poudre de d'oxyde de zirconium dopée par de l'oxyde d'yttrium introduite dans la fraction matricielle présente une taille médiane supérieure à 5 µm comme l'indique la comparaison des exemples 5 et 6 ou 8 et 7.

La résistance aux chocs thermiques est également améliorée de façon remarquable lorsque on utilise une poudre d'oxyde de zirconium co-dopée par les oxydes de calcium et d'yttrium en synergie avec une poudre d'oxyde de zirconium dopée par de l'oxyde d'yttrium, comme l'indique la comparaison de l'exemple 8 aux exemples 4 et 5 ou encore la comparaison de l'exemple 13 ou 14 à l'exemple 10 ou enfin la comparaison de l'exemple 16 à l'exemple 15.

Une comparaison des exemples 1 et 2 montre que l'ajout d'oxyde d'yttrium indépendamment de l'oxyde de zirconium n'améliore pas les performances. Il est ainsi important que l'oxyde de zirconium soit stabilisé, au moins en partie, voire totalement par de l'oxyde d'yttrium avant le frittage.

Dans une application à un gazéifieur, les exemples 5 à 8, 13 et 14 sont considérés comme les meilleurs, et en particulier les exemples 8, 13 et 14 offrent un très bon compromis entre la résistance à la pénétration de CaO, la résistance aux chocs thermiques et le coût de fabrication (CaO étant moins cher que Y₂O₃).

Une comparaison des exemples 11 et 12 illustre encore l'intérêt de l'ajout d'une poudre de particules d'oxyde de zirconium stabilisé à l'oxyde d'yttrium pour améliorer la résistance à la pénétration de CaO sur des produits frittés dont le granulat est constitué d'oxydes de chrome et d'aluminium, tout en conservant une bonne résistance aux chocs thermiques. Une comparaison de ces exemples confirme également qu'une stabilisation à l'oxyde d'yttrium est plus efficace qu'une stabilisation à l'oxyde de calcium.

Une analyse au microscope électronique à balayage (MEB) couplée avec une analyse EDS (Energy Dispersive Spectrometry) permet de vérifier que, dans les produits de l'invention, l'oxyde d'yttrium (et, le cas échéant, l'oxyde de calcium) est bien associé à l'oxyde de zirconium de la matrice.

Bien entendu, la présente invention n'est pas limitée aux modes de réalisation décrits fournis à titre d'exemples illustratifs et non limitatifs.

En particulier, l'application du produit réfractaire fritté selon l'invention n'est pas limitée à un gazéifieur.

## Revendications

1. Produit réfractaire fritté présentant un granulat lié par une matrice et comportant, en pourcentages en masse sur la base des oxydes,
- plus de 40% d'oxyde de chrome Cr₂O₃,
- moins de 50% d'oxyde d'aluminium Al₂O₃,
- 1% ou plus d'oxyde de zirconium ZrO₂ dont au moins 20% en masse est stabilisé sous la forme cubique et/ou quadratique,
- 0,1% ou plus et moins de 2,0% d'oxyde d'yttrium Y₂O₃, agissant comme stabilisant de l'oxyde de zirconium ZrO₂,
- moins de 1,9% d'oxyde d'hafnium HfO₂,
la teneur totale en oxydes de chrome, d'aluminium et de zirconium Cr₂O₃ + Al₂O₃ + ZrO₂ étant supérieure à 70%,
le produit comportant un co-dopant, agissant comme stabilisant de l'oxyde de zirconium ou pas, choisi parmi CaO, MgO, TiO₂ et leurs mélanges, la somme des teneurs en oxydes de calcium, de magnésium et de titane CaO + MgO + TiO₂ étant inférieure à 6,0% et supérieure à 0,5%, en pourcentages en masse, et plus de 50%, voire plus de 90%, de l'oxyde d'yttrium et du co-dopant étant contenu dans la matrice, en pourcentage en masse.

2. Produit selon la revendication précédente, dans lequel
- la teneur en oxyde de chrome Cr₂O₃ est supérieure à 65%, et/ou
- la teneur en oxyde d'aluminium Al₂O₃ est inférieure à 35%, et/ou
- la teneur en oxyde de zirconium ZrO₂ est supérieure à 3%, et/ou
- la teneur en oxyde d'yttrium Y₂O₃ est supérieure à 0,2%, et/ou
- la teneur totale en oxydes de chrome, d'aluminium et de zirconium Cr₂O₃ + Al₂O₃ + ZrO₂ est supérieure à 80%,
en pourcentages en masse sur la base des oxydes.

3. Produit selon la revendication précédente, dans lequel
- la teneur en oxyde de chrome Cr₂O₃ est supérieure à 75%, et/ou
- la teneur en oxyde d'aluminium Al₂O₃ est inférieure à 10%, et/ou
- la teneur en oxyde de zirconium ZrO₂ est supérieure à 4,5%, et/ou
- la teneur en oxyde d'yttrium Y₂O₃ est supérieure à 0,3%, et/ou
- la teneur totale en oxydes de chrome, d'aluminium et de zirconium Cr₂O₃ + Al₂O₃ +ZrO₂ est supérieure à 90%, et/ou
- la somme des teneurs en oxydes de chrome Cr₂O₃, d'aluminium Al₂O₃, de zirconium ZrO₂, d'yttrium Y₂O₃, de calcium CaO, de silicium SiO₂, de magnésium MgO, de titane TiO₂ et d'hafnium HfO₂ est supérieure à 95%,
en pourcentages en masse sur la base des oxydes.

4. Produit selon la revendication précédente, dans lequel
- la teneur en oxyde de chrome Cr₂O₃ est supérieure à 80% et/ou
- la teneur en oxyde d'aluminium Al₂O₃ est inférieure à 5%, et/ou
- la teneur en oxyde de zirconium ZrO₂ est supérieure à 5%.

5. Produit selon l'une quelconque des revendications précédentes, dans lequel plus de 50% de l'oxyde de zirconium est stabilisé sous la forme cubique et/ou quadratique, en pourcentage en masse.

6. Produit selon l'une quelconque des revendications précédentes, dans lequel le seul oxyde de zirconium présent dans la matrice représente plus de 2,5% de la masse totale du produit.

7. Produit selon l'une quelconque des revendications précédentes, dans lequel plus de 90% de l'oxyde d'yttrium Y₂O₃ est présent dans la matrice.

8. Produit selon l'une quelconque des revendications précédentes, dans lequel la teneur en oxyde d'aluminium Al₂O₃ dans la matrice est supérieure à 1% et inférieure à 10%, en pourcentage en masse sur la base de la masse des oxydes du produit.

9. Produit selon l'une quelconque des revendications précédentes, dans lequel
- la teneur en oxyde d'aluminium Al₂O₃ est supérieure à 1%, et/ou
- la teneur en oxyde de silicium SiO₂ est supérieure à 0,5% et inférieure à 6%,
en pourcentages en masse sur la base des oxydes.

10. Produit selon l'une quelconque des revendications précédentes, dans lequel
- la teneur en oxyde d'aluminium Al₂O₃ est supérieure à 2%, et/ou
- la teneur en oxyde de silicium SiO₂ est inférieure à 3%.

11. Produit selon l'une quelconque des revendications précédentes, comportant en pourcentage en masse sur la base des oxydes, pour un total de 100%,
- 60% < Cr₂O₃ < 95%, de préférence 65% < Cr₂O₃ < 90%,
- 1% < Al₂O₃ < 25%, de préférence 2% < Al₂O₃ < 10%, de préférence Al₂O₃ < 5%,
- 3% < ZrO₂ < 10%, de préférence 4% < ZrO₂ < 8%,
- HfO₂ < 1,0%, de préférence HfO₂ < 0,5%,
- 0,1% < Y₂O₃, de préférence 0,2% < Y₂O₃,
- autres oxydes < 10%, de préférence autres oxydes < 5%.

12. Gazéifieur comportant un réacteur pourvu d'une paroi intérieure revêtue, au moins partiellement, par un revêtement réfractaire comportant un produit selon l'une quelconque des revendications précédentes.

13. Gazéifieur selon la revendication précédente, dans lequel ledit produit réfractaire se présente sous la forme d'une couche ou sous la forme d'un bloc.

14. Procédé de fabrication comportant les étapes successives suivantes :
a) préparation d'une charge,
b) coulage de ladite charge dans un moule et mise en forme, par exemple par vibration et/ou pressage et/ou pilonnage de ladite charge à l'intérieur du moule, de manière à former une préforme,
c) démoulage de la préforme,
d) de préférence, séchage de la préforme, de préférence sous air ou atmosphère contrôlée en humidité, de préférence de manière que l'humidité résiduelle de la préforme soit comprise entre 0 et 0,5%,
e) cuisson de la préforme, de préférence sous atmosphère oxydante, à une température comprise entre 1300 à 1600°C de manière à former un produit réfractaire fritté,
procédé dans lequel la charge est adaptée pour conduire, en fin d'étape e), à un produit réfractaire fritté selon l'une quelconque des revendications 1 à 11, la charge comportant une fraction matricielle comportant une poudre d'oxyde de zirconium stabilisée, au moins en partie, avec de l'oxyde d'yttrium.

## Patentansprüche

1. Gesintertes feuerfestes Produkt, das ein durch eine Matrix gebundenes Granulat aufweist und bezogen auf die Oxide in Gewichtsprozent aufweist:
- mehr als 40% Chromoxid Cr₂O₃,
- weniger als 50% Aluminiumoxid Al₂O₃,
- 1% oder mehr Zirconiumdioxid ZrO₂, wovon mindestens 20 Gewichts-% als kubische und/oder tetragonale Form stabilisiert ist,
- mindestens 0,1% und weniger als 2,0% Yttriumoxid Y₂O₃, das als Stabilisator für Zirconiumdioxid ZrO₂ dient,
- weniger als 1,9% Hafniumdioxid HfO₂,
wobei der Gesamtgehalt an Chromoxid, Aluminiumoxid und Zirconiumdioxid Cr₂O₃ + Al₂O₃ + ZrO₂ über 70% beträgt,
wobei das Produkt ein Co-Dotierungsmittel aufweist, das als Stabilisator des Zirconiumdioxids dient oder nicht dazu dient, ausgewählt aus CaO, MgO, TiO₂ und deren Mischungen, wobei die Summe des Gehalts an Calciumoxid, Magnesiumoxid und Titandioxid CaO + MgO + TiO₂ unter 6,0 Gewichts-% und über 0,5 Gewichts-% beträgt, und mehr als 50 Gewichts-%, sogar mehr als 90 Gewichts-%, des Yttriumoxids und des Co-Dotierungsmittels in der Matrix enthalten sind.

2. Produkt nach dem vorhergehenden Anspruch, wobei
- der Gehalt an Chromoxid Cr₂O₃ über 65% beträgt, und/oder
- der Gehalt an Aluminiumoxid Al₂O₃ unter 35% beträgt, und/oder
- der Gehalt an Zirconiumdioxid ZrO₂ über 3% beträgt, und/oder
- der Gehalt an Yttriumoxid Y₂O₃ über 0,2% beträgt, und/oder
- der Gesamtgehalt an Chromoxid, Aluminiumoxid und Zirconiumdioxid Cr₂O₃ + Al₂O₃ + ZrO₂ über 80% beträgt,
in Gewichtsprozent bezogen auf die Oxide.

3. Produkt nach dem vorhergehenden Anspruch, wobei
- der Gehalt an Chromoxid Cr₂O₃ über 75% beträgt, und/oder
- der Gehalt an Aluminiumoxid Al₂O₃ unter 10% beträgt, und/oder
- der Gehalt an Zirconiumdioxid ZrO₂ über 4,5% beträgt, und/oder
- der Gehalt an Yttriumoxid Y₂O₃ über 0,3% beträgt, und/oder
- der Gesamtgehalt an Chromoxid, Aluminiumoxid und Zirconiumdioxid Cr₂O₃ + Al₂O₃ + ZrO₂ über 90% beträgt, und/oder
- die Summe des Gehalts an Chromoxid Cr₂O₃, Aluminiumoxid Al₂O₃, Zirconiumdioxid ZrO₂, Yttriumoxid Y₂O₃, Calciumoxid CaO, Siliciumdioxid SiO₂, Magnesiumoxid MgO, Titandioxid TiO₂ und Hafniumdioxid HfO₂ über 95% beträgt,
in Gewichtsprozent bezogen auf die Oxide.

4. Produkt nach dem vorhergehenden Anspruch, wobei
- der Gehalt an Chromoxid Cr₂O₃ über 80% beträgt, und/oder
- der Gehalt an Aluminiumoxid Al₂O₃ unter 5% beträgt, und/oder
- der Gehalt an Zirconiumdioxid ZrO₂ über 5% beträgt.

5. Produkt nach einem der vorhergehenden Ansprüche, wobei mehr als 50 Gewichts-% des Zirconiumdioxids in der kubischen und/oder tetragonalen Form stabilisiert sind.

6. Produkt nach einem der vorhergehenden Ansprüche, wobei allein das in der Matrix vorhandene Zirconiumdioxid mehr als 2,5% der Gesamtmasse des Produkts ausmacht.

7. Produkt nach einem der vorhergehenden Ansprüche, wobei mehr als 90% Yttriumoxid Y₂O₃ in der Matrix vorliegen.

8. Produkt nach einem der vorhergehenden Ansprüche, wobei der Gehalt an Aluminiumoxid Al₂O₃ in der Matrix über 1% und unter 10% beträgt, in Gewichtsprozent bezogen auf die Masse der Oxide des Produkts.

9. Produkt nach einem der vorhergehenden Ansprüche, wobei
- der Gehalt an Aluminiumoxid Al₂O₃ über 1% beträgt, und/oder
- der Gehalt an Siliciumdioxid SiO₂ über 0,5% und unter 6% beträgt,
in Gewichtsprozent bezogen auf die Oxide.

10. Produkt nach einem der vorhergehenden Ansprüche, wobei
- der Gehalt an Aluminiumoxid Al₂O₃ über 2% beträgt, und/oder
- der Gehalt an Siliciumdioxid SiO₂ unter 3% beträgt.

11. Produkt nach einem der vorhergehenden Ansprüche, das in Gewichtsprozent bezogen auf die Oxide, bei insgesamt 100%, aufweist:
- 60% < Cr₂O₃ < 95%, vorzugsweise 65% < Cr₂O₃ < 90%,
- 1% < Al₂O₃ < 25%, vorzugsweise 2% < Al₂O₃ < 10%, vorzugsweise Al₂O₃ < 5%,
- 3% < ZrO₂ < 10%, vorzugsweise 4% < ZrO₂ < 8%,
- HfO₂ < 1,0%, vorzugsweise HfO₂ < 0,5%,
- 0,1% < Y₂O₃, vorzugsweise 0,2% < Y₂O₃,
- weitere Oxide < 10%, vorzugsweise weitere Oxide < 5%.

12. Vergaser, der einen Reaktor aufweist, der mit einer Innenwand versehen ist, die zumindest teilweise mit einer feuerfesten Beschichtung beschichtet ist, die ein Produkt nach einem der vorhergehenden Ansprüche aufweist.

13. Vergaser nach dem vorhergehenden Anspruch, wobei das feuerfeste Produkt in Form einer Schicht oder in Form eines Blocks vorliegt.

14. Herstellungsverfahren, das folgende aufeinanderfolgende Schritte umfasst:
a) Herstellen einer Charge,
b) Gießen der Charge in eine Form und In-Form-Bringen der Charge im Inneren der Form, beispielsweise durch Rütteln und/oder Pressen und/oder Stampfen, damit ein Vorformling entsteht,
c) Entnehmen des Vorformlings aus der Form,
d) vorzugsweise Trocknen des Vorformlings, vorzugsweise an Luft oder in feuchtigkeitsgeregelter Atmosphäre, vorzugsweise derart, dass die Restfeuchtigkeit des Vorformlings zwischen 0 und 0,5% liegt,
e) Brennen des Vorformlings, vorzugsweise in oxidierender Atmosphäre, bei einer Temperatur zwischen 1300 und 1600°C, sodass ein gesintertes feuerfestes Produkt entsteht,
wobei die Charge in dem Verfahren so ausgelegt ist, dass sie am Ende von Schritt e) ein gesintertes feuerfestes Produkt nach einem der Ansprüche 1 bis 11 ergibt, wobei die Charge eine Matrixfraktion aufweist, die ein Zirconiumdioxidpulver aufweist, das zumindest teilweise mit Yttriumoxid stabilisiert ist.

## Claims

1. A sintered refractory product exhibiting an aggregate bonded by a matrix and comprising, as percentages by weight on the basis of the oxides:
- more than 40% of chromium oxide Cr₂O₃,
- less than 50% of aluminum oxide Al₂O₃,
- 1% or more of zirconium oxide ZrO₂, at least 20% by weight of which is stabilized in the cubic and/or tetragonal form,
- 0.1% or more and less than 2.0% of yttrium oxide Y₂O₃, acting as stabilizer for the zirconium oxide ZrO₂,
- less than 1.9% of hafnium oxide HfO₂,
the total content of chromium oxide, aluminum oxide and zirconium oxide Cr₂O₃ + Al₂O₃ + ZrO₂ being greater than 70%,
the product comprising a codopant, acting or not acting as stabilizer for the zirconium oxide, chosen from CaO, MgO, TiO₂ and their mixtures, the sum of the contents of calcium oxide, magnesium oxide and titanium oxide CaO + MgO + TiO₂ being less than 6.0% and greater than 0.5%, as percentages by weight, and more than 50%, indeed even more than 90%, of the yttrium oxide and of the codopant being present in the matrix, as percentage by weight.

2. The product as claimed in the preceding claim, in which:
- the content of chromium oxide Cr₂O₃ is greater than 65%, and/or
- the content of aluminum oxide Al₂O₃ is less than 35%, and/or
- the content of zirconium oxide ZrO₂ is greater than 3%, and/or
- the content of yttrium oxide Y₂O₃ is greater than 0.2%, and/or
- the total content of chromium oxide, aluminum oxide and zirconium oxide Cr₂O₃ + Al₂O₃ + ZrO₂ is greater than 80%,
as percentages by weight on the basis of the oxides.

3. The product as claimed in the preceding claim, in which:
- the content of chromium oxide Cr₂O₃ is greater than 75%, and/or
- the content of aluminum oxide Al₂O₃ is less than 10%, and/or
- the content of zirconium oxide ZrO₂ is greater than 4.5%, and/or
- the content of yttrium oxide Y₂O₃ is greater than 0.3%, and/or
- the total content of chromium oxide, aluminum oxide and zirconium oxide Cr₂O₃ + Al₂O₃ +ZrO₂ is greater than 90%, and/or
- the sum of the contents of chromium oxide Cr₂O₃, aluminum oxide Al₂O₃, zirconium oxide ZrO₂, yttrium oxide Y₂O₃, calcium oxide CaO, silicon oxide SiO₂, magnesium oxide MgO, titanium oxide TiO₂ and hafnium oxide HfO₂ is greater than 95%,
as percentages by weight on the basis of the oxides.

4. The product as claimed in the preceding claim, in which:
- the content of chromium oxide Cr₂O₃ is greater than 80%, and/or
- the content of aluminum oxide Al₂O₃ is less than 5%, and/or
- the content of zirconium oxide ZrO₂ is greater than 5%.

5. The product as claimed in any one of the preceding claims, in which more than 50% of the zirconium oxide is stabilized in the cubic and/or tetragonal form, as percentage by weight.

6. The product as claimed in any one of the preceding claims, in which the only zirconium oxide present in the matrix represents more than 2.5% of the total weight of the product.

7. The product as claimed in any one of the preceding claims, in which more than 90% of the yttrium oxide Y₂O₃ is present in the matrix.

8. The product as claimed in any one of the preceding claims, in which the content of aluminum oxide Al₂O₃ in the matrix is greater than 1% and less than 10%, as percentage by weight on the basis of the weight of the oxides of the product.

9. The product as claimed in any one of the preceding claims, in which:
- the content of aluminum oxide Al₂O₃ is greater than 1%, and/or
- the content of silicon oxide SiO₂ is greater than 0.5% and less than 6%,
as percentages by weight on the basis of the oxides.

10. The product as claimed in any one of the preceding claims, in which:
- the content of aluminum oxide Al₂O₃ is greater than 2%, and/or
- the content of silicon oxide SiO₂ is less than 3%.

11. The product as claimed in any one of the preceding claims, comprising, as percentage by weight on the basis of the oxides, for a total of 100%:
- 60% < Cr₂O₃ < 95%, preferably 65% < Cr₂O₃ < 90%,
- 1% < Al₂O₃ < 25%, preferably 2% < Al₂O₃ < 10%, preferably Al₂O₃ < 5%,
- 3% < ZrO₂ < 10%, preferably 4% < ZrO₂ < 8%,
- HfO₂ < 1.0%, preferably HfO₂ < 0.5%,
- 0.1% < Y₂O₃, preferably 0.2% < Y₂O₃,
- other oxides < 10%, preferably other oxides < 5%.

12. A gasifier comprising a reactor provided with an internal wall lined, at least partially, with a refractory lining comprising a product as claimed in any one of the preceding claims.

13. The gasifier as claimed in the preceding claim, in which said refractory product is provided in the form of a layer or in the form of a block.

14. A manufacturing process comprising the following successive stages:
a) preparation of a charge,
b) casting said charge in a mold and shaping, for example by vibrating and/or pressing and/or pounding said charge inside the mold, so as to form a preform,
c) removing the preform from the mold,
d) preferably, drying the preform, preferably under air or an atmosphere controlled in humidity, preferably so that the residual moisture content of the preform is between 0 and 0.5%,
e) firing the preform, preferably under an oxidizing atmosphere, at a temperature of between 1300 and 1600°C, so as to form a sintered refractory product,
in which process the charge is suitable for resulting, at the end of stage e), in a sintered refractory product as claimed in any one of claims 1 to 11, the charge comprising a matrix fraction comprising a zirconium oxide powder stabilized, at least in part, with yttrium oxide.
